# EUROPÄISCHE PATENTSCHRIFT

(11) **EP 2 845 719 B1**
(45) Veröffentlichungstag und Bekanntmachung des Hinweises auf die Patenterteilung: **06.06.2018**
(21) Anmeldenummer: 14165343.6
(22) Anmeldetag: 22.04.2014
(51) Int. Cl.: B29C 64/153, B29C 64/20, B29C 64/364, B22F 3/105

(54) **Vorrichtung zur Herstellung eines Bauteils**
Device for producing a component
Dispositif destiné à la fabrication d'un composant

(30) Priorität: 20.06.2013 DE 102013211672
(43) Veröffentlichungstag der Anmeldung: 11.03.2015
(73) Patentinhaber: MTU Aero Engines AG, 80995 München (DE)
(72) Erfinder: Bayer, Erwin, 85221 Dachau (DE); Hiller, Sven-Jürgen, 85253 Erdweg (DE); Ader, Christoph, 80802 München (DE)

(56) Entgegenhaltungen:
- WO-A1-92/08592
- WO-A2-2010/061174
- DE-A1- 3 923 829
- DE-A1-102004 031 881

## Beschreibung

Die Erfindung betrifft eine Vorrichtung zur generativen Herstellung eines Bauteils gemäß dem Oberbegriff des Anspruchs 1.

Solche Vorrichtung sind bekannt, um generativ Bauteile herstellen zu können. Ein Laserstrahl trifft auf ein Pulverbett. Dort wird das Pulverbett aufgeschmolzen oder lediglich gesintert. Der Laserstrahl wird nur an den Stellen geführt, an dem auch der Pulverwerkstoff verschmolzen werden soll. Nachdem eine erste Schicht erzeugt wurde, wird auf diese Schicht neuer Pulverwerkstoff mittels eines Rakels aufgetragen. Entsprechend den dreidimensionalen Daten des herzustellenden Bauteils wird der Laserstrahl an den Stellen geführt, an dem das Pulver aufgeschmolzen werden muss. Dieser Vorgang wiederholt sich solange, bis das Bauteil fertigherstellt ist.

Sobald der Laser auf das Pulverbett auftrifft, entstehen unerwünschte Funken, die auf das Pulverbett landen können. Ebenso kann das Pulver verdampfen und damit Abgase erzeugen, die in den Laserstrahl gelangen und dadurch die Laserleistung beeinträchtigen können. Um diese negativen Einflüsse zu vermeiden, ist es bekannt, Schutzgas zu verwenden, das parallel zum Pulverbett geführt wird. Damit lässt sich zwar wirksam Abgase vom Laserstrahl ableiten, allerdings kann bei starkem Funkenflug nicht verhindert werden, dass diese vorgeschmolzenen Funkenpartikel dennoch auf das Pulverbett landen.

Somit liegt der Erfindung die Aufgabe zu Grunde, eine Vorrichtung zur Herstellung eines Bauteils vorzustellen, die wirksam verhindert, dass Funkenpartikel auf das Pulverbett landen.

DE-A-3923829 offenbart die Merkmale des Oberbegriffs des Anspruchs 1.

Die Aufgabe wird durch die Merkmale des Anspruchs 1 gelöst. Erfindungsgemäß weist eine Vorrichtung zur Herstellung eines Bauteils eine Energiequelle mit einem beweglichen Energiestrahl auf. Ferner weist die Vorrichtung einen Baubereich auf, in dem der Energiestrahl auf einen zu bearbeitenden Werkstoff auftreffbar ist. Diese Vorrichtung weist um den Energiestrahl der Energiequelle einen inneren Rahmen auf mit mindestens einer ersten Gasöffnung zum Absaugen und/oder zum Zuführen eines Schutzgases.

Dies hat den Vorteil, dass die Schutzgasführung nicht mehr horizontal sondern vertikal geführt wird, so dass die Funkenpartikel nicht mehr auf das Pulverbett landen können.

In der Erfindung weist die Vorrichtung um den Energiestrahl der Energiequelle einen äußeren Rahmen auf mit mindestens einer zweiten Gasöffnung zum Absaugen und/oder zum Zuführen eines Schutzgases aufweist.

Dies hat den Vorteil, dass das Schutzgas von einem Rahmen zum anderen Rahmen geführt wird. Es wird darauf hingewiesen, dass der innere Rahmen bzw. der äußere Rahmen eine einzige den Rahmen umlaufende Gasöffnung aufweisen kann oder aber mehrere über den Rahmen verteilte Gasöffnungen aufweisen kann, die insbesondere gleich beabstandet sind.

In einer weiteren vorteilhaften Ausgestaltung der Erfindung ist die erste Gasöffnung als Gasabsaugung ausgelegt und/oder ist die zweite Gasöffnung als Gaszuführung ausgelegt.

Dies hat den Vorteil, dass das Schutzgas von außen nach innen geführt wird, so dass das Schutzgas vom äußeren Rahmen hin zum inneren Rahmen geleitet wird. Dabei kann das Schutzgas auf das Pulverbett bzw. auf den Bauteilbereich bzw. auf die Oberfläche des Bauteilbereichs geleitet werden.

In der Erfindung ist der innere Rahmen ringförmig und der äußere Rahmen ringförmig gestaltet. Die Form als Ring ist insbesondere vorteilhaft, da sich dadurch eine Art Tornado aus einem Schutzgasstrom bilden kann.

Dabei kann die erste Gasöffnung und/oder die zweite Gasöffnung symmetrisch zum Austritts des Energiestrahls und/oder zum Energiestrahlauftreffpunkt angeordnet sein. Es ist insbesondere vorteilhaft, wenn die erste Gasöffnung symmetrisch zum Energiestrahl bzw. zum Energiestrahlauftreffpunkt angeordnet ist, da sichergestellt ist, dass der beim Schweißen entstehende Schmauch wirksam abgesaugt wird und die Funken entsprechend in die erste Gasöffnung abgesogen werden. Dabei ist festzuhalten, dass die Absaugung derart eingestellt werden kann, dass das Pulver im Pulverbett noch nicht abgesogen wird.

Die Vorrichtung weist eine Heizeinrichtung zum Aufwärmen des Schutzgases auf. So kann das Schutzgas bis auf 60°C aufgewärmt werden. Mit einem solch aufgewärmten Schutzgas kann kondensierter Wasserdampf aus dem Werkstoffpulver ausgetrieben werden. Dies verbessert die Qualität des herzustellenden Bauteils erheblich.

Der innere Rahmen folgt dem Energiestrahlauftreffpunkt . Der Energiestrahl trifft auf die Pulveroberfläche an dem Punkt, an dem das Pulver aufgeschmolzen wird. Dieser Punkt wird als Energiestrahlauftreffpunkt bezeichnet. Der Energiestrahl - hier beispielsweise eine Laserstrahl - wird gemäß den geometrischen Daten des herzustellenden Bauteils über das Werkstoffpulver geführt. Somit ist es vorteilhaft, dass der innere Rahmen diesen Strahl folgt, um in der Nähe des Pulverbetts die dabei entstehenden Verunreinigungen, wie Schmauch und Funken, wirksam aufzusaugen. Es ist sogar sehr vorteilhaft, wenn der innere Rahmen direkt um Schmelzbereich im Pulverbett angeordnet ist.

In einer weiteren vorteilhaften Ausgestaltung der Erfindung sind die erste Gasöffnung und/oder die zweite Gasöffnung auf den Baubereich gerichtet. Der Baubereich stellt bei einem generativen Herstellverfahren die Pulverbettoberfläche dar.

Dies hat den Vorteil, dass das Schutzgas beispielsweise vom äußeren Rahmen zuerst auf die Pulveroberfläche geleitet wird. Von dort aus, wird das Schutzgas dann in die erste Öffnung des inneren Rahmens gesogen. Dabei kann ein torusförmiger Tornado entstehen. Durch die gezielte Abführung des Schutzgases kommt es zu keiner Kontamination des Pulvers durch Rauch, Ruß und aufgeschmolzene bzw. hochgeschleuderte Partikel. Damit wird verhindert, dass das Bauteil verunreinigt wird und der Herstellprozess ist homogener. Das Pulver bleibt länger sauber und kann daher öfter wiederverwendet werden.
In der Erfindung ist im Baubereich eine Ultraschallquelle angeordnet. Dies hat den Vorteil, dass Inhomogenitäten und Fehler durch eine Ultraschallankopplung deutlich reduziert werden können. Der Ultraschall kann dabei über die Basisplatte eingekoppelt werden. Der eingekoppelte Ultraschall läuft über das bereits erstarrte und aufgebaute Bauteil und regt den Schmelzbereich zum Schwingen an. Die Schwingung im Schmelzbad führt zu einer Durchmischung des Pulverwerkstoffes und somit zur einer Homogenisierung des Werkstoffes. Darüber hinaus werden Gasblasen aus dem Schmelzbad getrieben, so dass die Gefahr verringert wird, dass Pulverpartikel nicht vollständig aufgeschmolzen werden. Außerdem weist der Werkstoff eine geringere Porosität auf. Ferner können durch die Ultraschallunterstützung Fehler im Werkstoff verringert werden und eine Vergleichmäßigung der Schmelze und des Erstarrungsgefüges erreicht werden.

Weitere vorteilhafte Ausgestaltung der Erfindung sind in den weiteren Ansprüchen wiedergegeben.

Die Erfindung wird anhand einer schematischen Zeichnung beispielhaft näher erläutert. Dabei zeigt:

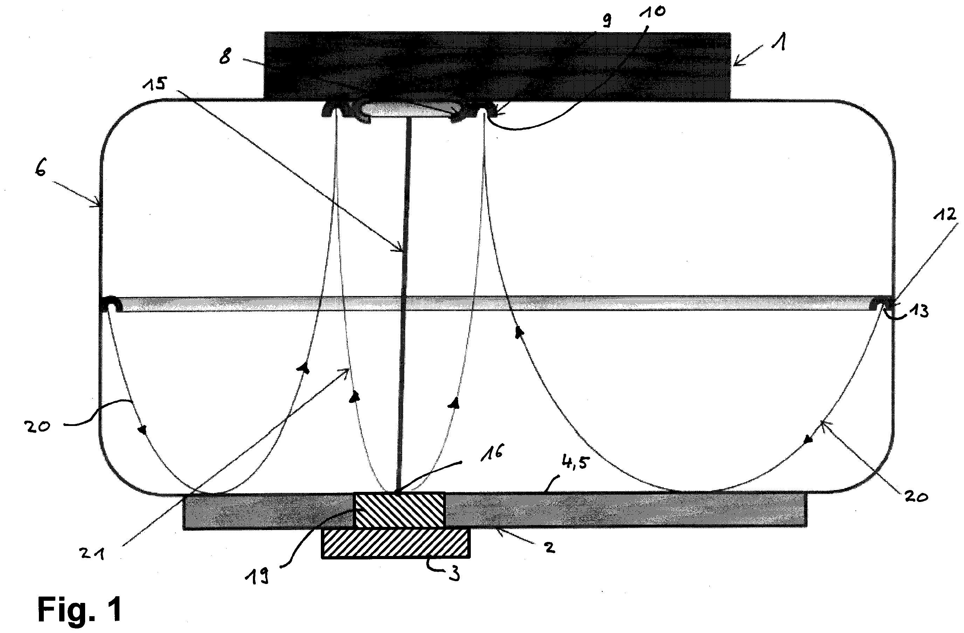

- - Fig. 1: eine Seitenansicht einer erfindungsgemäßen Herstellvorrichtung mit entsprechnender Schutzgaszu- und abführung.

In Figur 1 ist einer erfindungsgemäße Herstellvorrichtung abgebildet. Im oberen Bereich ist eine Ablenkeinheit für eine Lasereinheit (Energiequelle) 1 zu erkennen. Im unteren Bereich ist eine absenkbare Bauplattform 2 mit einem Pulverbett abgebildet. An dieser Bauplattform 2 ist eine Sonotrode 3 (Ultraschallquelle) angebracht. Die Oberfläche 4 des Pulverbetts stellt den Baubereich 5 dar. Im Bereich zwischen der Ablenkeinheit 1 und der Bauplattform 2 wird durch eine Bearbeitungskammer 6 umschlossen. Diese Bearbeitungskammer 6 kann optional vorgesehen sein.

Im Folgenden wird aufgeführt, was innerhalb der Bearbeitungskammer 6 angeordnet ist. Die untere Seite der Ablenkeinheit 1 schließt an der oberen Seite der Bearbeitungskammer 6 an. Aus dieser unteren Seite der Ablenkeinheit 1 befindet sich der Austritt 7 des Energiestrahls (hier Laserstrahl) 15. Direkt um den Austritt 7 ist eine Blende 8 angeordnet, um die Optik des Energiestrahls 15 zu schützen. Direkt um diese Blende 8 ist ein innerer Rahmen 9 angeordnet mit mindestens einer ersten Gasöffnung 10. Diese erste Gasöffnung 10 ist auf die Pulveroberfläche 4 gerichtet. In diesem Ausführungsbeispiel ist der innere Rahmen 9 ringförmig und direkt unterhalb der Ablenkeinheit 1 angeordnet. Es ist ebenso vorstellbar, dass der innere Rahmen 9 knapp über der Pulveroberfläche 4 angeordnet ist. In der Figur 1 ist ebenso zu erkennen, dass innere Rahmen 9 parallel zur Pulveroberfläche 4 angeordnet ist. Eine zur Pulveroberfläche 4 schräg angeordneter innerer Rahmen 9 ist ebenso denkbar. Im mittleren Bereich der Bearbeitungskammer 6 ist ein äußerer Rahmen 12 mit mindestens einer zweiten Gasöffnung 13 zu erkennen. Der äußere Rahmen 12 ist in diesem Ausführungsbeispiel ebenso ringförmig gestaltet und weist gegenüber dem inneren Rahmen 9 einen größeren Durchmesser auf und ist umlaufend in der Bearbeitungskammer 6 angeordnet. Der äußere Rahmen 12 kann ebenso parallel zur Pulverbettoberfläche 4 angeordnet sein. Die zweite Gasöffnung 13 ist ebenfalls auf die Pulverbettoberfläche 4 gerichtet.

Im Folgenden wird die Funktionsweise der Vorrichtung näher erläutert. Aus dem Austritt 7 gelangt der Energiestrahl 15 heraus und trifft auf die Pulveroberfläche 4 im Energiestrahlauftreffpunkt 16. Unterhalb des Energiestrahlauftreffpunkt 16 ist im Pulverbett 18 bereits ein halbfertiges Bauteil 19 zu erkennen. Im Energiestrahlauftreffpunkt 16 kann das Pulver des Pulverbetts 18 aufgeschmolzen oder auch nur gesintert werden. Unterhalb des Pulverbetts 18 befindet sich, wie bereits erwähnt, die Bauplattform 2. Unterhalb dieser Bauplattform 2 ist eine Sonotrode 3 angebracht, die durch die Ultraschallunterstützung Materialfehler verringern kann.

In diesem Ausführungsbeispiel ist die erste Gasöffnung 10 des inneren Rahmens 9 als Gasabsaugung ausgelegt. Die zweite Gasöffnung 13 des äußeren Rahmens 12 ist als Gaszuführung ausgelegt. In diesem Ausführungsbeispiel ist der innere Rahmen 9 über dem äußeren Rahmen 12 angeordnet. Es kann auch vorteilhaft sein, den inneren Rahmen 9 direkt über die Pulveroberfläche 4 zu führen. Dabei kann dann dieser innere Rahmen 9 mit dem Energiestrahl 15 mitgeführt werden.

Im Folgenden wird nun die Funktionsweise der Gasspülung näher erläutert. Aus der zweiten Gasöffnung 13 des äußeren Rahmens 12 strömt frischer Gasstrom 20 auf die Pulveroberfläche 4 und geht in einem Bogen in Richtung des Austritt 7 des Energiestrahls 15. Im oberen Bereich der Bearbeitungskammer 6 wird das Schutzgas 20 durch die erste Gasöffnung 10 des inneren Rahmens 9 abgesogen. Dieser frische Gasstrom 20 bewirkt, dass der beim Schmelzen am Energiestrahlauftreffpunkt 16 entstehende Schmauch und Rauch 21 parallelförmig in Richtung der ersten Gasöffnung 10 geführt und dort abgesaugt wird. Damit wird wirksam verhindert, dass Schmauch und Rauch 21 und Funken auf die Pulveroberfläche 4 gelangen. Durch die dedizierte Absaugung durch die erste Gasöffnung 10 wird ebenso verhindert, dass Schmauch und Rauch in den Energiestrahl 15 gelangen. Damit wird die Energiestrahlleistung nicht beeinträchtigt.

In diesem Ausführungsbeispiel ist der Energiestrahl 15 im Wesentlichen senkrecht Pulveroberfläche 4 angeordnet. Über die Ablenkeinheit 1 kann der Energiestrahl 15 auch schräg auf die Pulveroberfläche 4 auftreffen.

Die Schutzgasführung bzw. Schutzgasspülung ist nicht auf Pulverbettlaserschmelzen eingeschränkt, sondern kann auch für Laserpulverauftragschweißen oder Elektronenauftragschweißen angewandt werden.

### Bezugszeichenliste

- 1: Lasereinheit
- 2: Bauplattform
- 3: Sonotrode
- 4: Oberfläche des Pulverbetts
- 5: Baubereich
- 6: Bearbeitungskammer
- 7: Austritt
- 8: Blende
- 9: innerer Rahmen
- 10: erste Gasöffnung
- 12: äußerer Rahmen
- 13: zweite Gasöffnung

- 15: Energiestrahl
- 16: Energiestrahlauftreffpunkt

- 18: Pulverbett
- 19: Bauteil
- 20: Frischer Schutzgasstrom
- 21: Schmauch und Rauch

## Patentansprüche

1. Vorrichtung zur generativen Herstellung eines Bauteils (19) mit
- einer Energiequelle (1) mit einem beweglichen Energiestrahl (15),
- einem Baubereich (5), in dem der Energiestrahl (15) auf einen zu bearbeitenden Werkstoff (18) auftreffbar ist und beim generativen Herstellungsverfahren die Pulverbettoberfläche darstellt,
wobei
- die Vorrichtung um den Energiestrahl (15) der Energiequelle (1)
- einen inneren ringförmigen, direkt um den Schmelzbereich im Pulverbett angeordneten Rahmen (9) mit mindestens einer ersten Gasöffnung (10) und
- einen äußeren ringförmigen Rahmen (12) mit mindestens einer zweiten Gasöffnung (13)
zum Absaugen und Zuführen eines Schutzgases aufweist, wobei der innere Rahmen (9) dem Energiestrahlauftreffpunkt (16) folgt und das Pulver des Pulverbetts in dem Energiestrahlauftreffpunkt aufgeschmolzen wird, **dadurch gekennzeichnet, dass**
- die Vorrichtung eine Heizeinrichtung zum Aufwärmen des Schutzgases aufweist
und
- im Baubereich (15) zusätzlich eine Ultraschallquelle angeordnet ist, die unterhalb einer absenkbaren Bauplattform(2) als Sonotrode angebracht ist.

2. Vorrichtung nach Anspruch 1, **dadurch gekennzeichnet, dass** die erste Gasöffnung (10) als Gasabsaugung ausgelegt ist und die zweite Gasöffnung (13) als Gaszuführung ausgelegt ist.

3. Vorrichtung nach mindestens einem der vorherigen Ansprüche, **dadurch gekennzeichnet, dass** der innere Rahmen (9) auf der Höhe des Austritts (7) des Energiestrahls (15) angeordnet ist und/oder der äußere Rahmen (12) auf der Höhe des Austritts (7) des Energiestrahls (15) angeordnet ist.

4. Vorrichtung nach mindestens einem der vorherigen Ansprüche, **dadurch gekennzeichnet, dass** die erste Gasöffnung (10) und die zweite Gasöffnung (13) symmetrisch zum Austritt (7) des Energiestrahls (15) und/oder zum Energiestrahlauftreffpunkt (16) angeordnet sind.

5. Vorrichtung nach mindestens einem der vorherigen Ansprüche 1 bis 4, **dadurch gekennzeichnet, dass** der innere Rahmen (9) zwischen dem Baubereich (5) und dem Austritt (7) des Energiestrahls (15) und/oder der äußere Rahmen (12) zwischen dem Baubereich (5) und dem Austritt (7) des Energiestrahls (15) angeordnet ist.

6. Vorrichtung nach mindestens einem der vorherigen Ansprüche, **dadurch gekennzeichnet, dass** die erste Gasöffnung (10) und/oder die zweite Gasöffnung (13) auf den Baubereich (5) gerichtet sind.

7. Vorrichtung nach mindestens einem der vorherigen Ansprüche, **dadurch gekennzeichnet, dass** der innere Rahmen (9) und/oder der äußere Rahmen (12) im Wesentlichen parallel zur Oberfläche des Baubereichs (5) angeordnet sind.

## Claims

1. A device for additive production of a component (19), comprising
- an energy source (1) having a movable energy beam (15),
- a build region (5), in which the energy beam (15) can impinge on a material (18) to be processed and which constitutes the powder bed surface in the additive production process,
- the device comprising, around the energy beam (15) of the energy source (1),
- an inner annular frame (9) which is arranged directly around the melting region in the powder bed and has at least one first gas opening (10), and
- an outer annular frame (12) having at least one second gas opening (13),
for extracting and delivering a protective gas, the inner frame (9) following the energy beam impingement point (16) and the powder of the powder bed being melted in the energy beam impingement point, **characterized in that**
- the device comprises a heating device for heating the protective gas
and
- an ultrasound source, which is mounted as a sonotrode below a lowerable build platform (2), is additionally arranged in the build region (15).

2. The device according to claim 1, **characterized in that** the first gas opening (10) is designed as a gas extraction means and the second gas opening (13) is designed as a gas delivery means.

3. The device according to at least one of the preceding claims, **characterized in that** the inner frame (9) is arranged at the height of the outlet (7) of the energy beam (15) and/or the outer frame (12) is arranged at the height of the outlet (7) of the energy beam (15).

4. The device according to at least one of the preceding claims, **characterized in that** the first gas opening (10) and the second gas opening (13) are arranged symmetrically with respect to the outlet (7) of the energy beam (15) and/or with respect to the energy beam impingement point (16).

5. The device according to at least one of the preceding claims 1 to 4, **characterized in that** the inner frame (9) is arranged between the build region (5) and the outlet (7) of the energy beam (15) and/or the outer frame (12) is arranged between the build region (5) and the outlet (7) of the energy beam (15).

6. The device according to at least one of the preceding claims, **characterized in that** the first gas opening (10) and/or the second gas opening (13) are directed towards the build region (5).

7. The device according to at least one of the preceding claims, **characterized in that** the inner frame (9) and/or the outer frame (12) are arranged substantially in parallel with the surface of the build region (5).

## Revendications

1. Dispositif de fabrication generative d'un composant (19), le dispositif comportant
- une source d'energie (1) comportant un faisceau d'energie mobile (15),
- une zone de construction (5) dans laquelle le faisceau d'energie (15) peut etre projeté sur un materiau à traiter (18) et qui représente la surface de lit pulvérulent dans le procédé de fabrication générative,
- le dispositif comportant, autour du faisceau d'energie (15) de la source d'energie (1)
- un cadre (9) interne annulaire, disposé directement autour de la zone de fusion dans le lit pulvérulent et pourvu d'au moins une premiere ouverture de gaz (10) et
- un cadre (12) externe annulaire pourvu d'au moins une deuxième ouverture de gaz (13)
pour aspirer et amener un gaz inerte, le cadre interne (9) suivant le point d'application (16) du faisceau d'energie et la poudre du lit pulvérulent étant fondue dans le point d'application du faisceau d'énergie, **caractérisé en ce que**
- le dispositif comporte un moyen de chauffage servant à rechauffer le gaz inerte
et
- une source d'ultrasons est en outre disposée dans la zone de construction (15), laquelle source d'ultrasons est montée au-dessous d'une plateforme de construction (2) sous la forme d'une sonotrode.

2. Dispositif selon la revendication 1, **caractérisé en ce que** la première ouverture de gaz (10) est conçue comme une aspiration de gaz et la deuxième ouverture de gaz (13) est conçue comme une amenée de gaz.

3. Dispositif selon au moins une des revendications précédentes, **caractérisé en ce que** le cadre interne (9) est disposé à hauteur de la sortie (7) du faisceau d'energie (15) et/ou le cadre externe (12) est disposé à hauteur de la sortie (7) du faisceau d'energie (15).

4. Dispositif selon au moins une des revendications précédentes, **caractérisé en ce que** la première ouverture de gaz (10) et la deuxième ouverture de gaz (13) sont disposees symetriquement par rapport à la sortie (7) du faisceau d'energie (15) et/ou au point d'application (16) du faisceau d'energie.

5. Dispositif selon au moins une des revendications precedentes 1 à 4, **caractérisé en ce que** le cadre interne (9) est disposé entre la zone de construction (5) et la sortie (7) du faisceau d'energie (15) et/ou le cadre externe (12) est disposé entre la zone de construction (5) et la sortie (7) du faisceau d'energie (15).

6. Dispositif selon au moins une des revendications précédentes, **caractérisé en ce que** la première ouverture de gaz (10) et/ou la deuxième ouverture de gaz (13) sont orientées vers la zone de construction (5).

7. Dispositif selon au moins une des revendications précédentes, **caractérisé en ce que** le cadre interne (9) et/ou le cadre externe (12) sont disposées sensiblement parallelement à la surface de la zone de construction (5).
